Europäisches Patentamt

European Patent Office

Office européen des brevets

(19)

(11) Veröffentlichungsnummer : **0 146 571 B1**

(12) **EUROPÄISCHE PATENTSCHRIFT**

(45) Veröffentlichungstag der Patentschrift :
15.03.89

(51) Int. Cl.⁴ : **F 23 C 11/02**

(21) Anmeldenummer : **84901978.1**

(22) Anmeldetag : **29.05.84**

(86) Internationale Anmeldenummer :
**PCT/DE 84/00120**

(87) Internationale Veröffentlichungsnummer :
**WO/8404953 (20.12.84 Gazette 84/30)**

(54) **WIRBELBETTFEUERUNGSANLAGE.**

(30) Priorität : **03.06.83 DE 3320049**

(43) Veröffentlichungstag der Anmeldung :
**03.07.85 Patentblatt 85/27**

(45) Bekanntmachung des Hinweises auf die Patenterteilung : **15.03.89 Patentblatt 89/11**

(84) Benannte Vertragsstaaten :
**AT BE CH DE FR GB LI LU NL SE**

(56) Entgegenhaltungen :
**WO--A--82 /017 62**
**DE--A-- 2 605 886**
**DE--A-- 2 948 482**
**GB--A-- 2 032 598**
**GB--A-- 2 047 558**
**US--A-- 4 308 806**
**US--A-- 4 329 324**
**US--A-- 4 419 965**

(73) Patentinhaber : **INTER POWER TECHNOLOGIE GmbH**
**Malstatter Markt 13**
**D-6600 Saarbrücken (DE)**

(72) Erfinder : **WIED, Erwin**
**Kleinenbroicher Str. 68**
**D-4044 Kaarst 2 (DE)**
Erfinder : **GLEZERMANN, Abraham**
**Lerchesbergring 26**
**D-6000 Frankfurt/M (DE)**

## Beschreibung

Die Erfindung betrifft eine Wirbelbettfeuerungsanlage mit einem Düsenboden für die Zufuhr von Verbrennungs- und Trägerluft sowie einer von unten in den Feuerungsraum einmündenden Brennstoffzuführung.

Aus der US-A-42 03 391 ist bereits eine Wirbelbettfeuerungsanlage bekanntgeworden, die einen Düsenboden für die Zufuhr von Verbrennungsund Trägerluft sowie eine von unten in den Feuerungsraum mündende und sich im Bereich der Einmündung erweiternde Brennstoffzuführung aufweist. Diese Erweiterung ist vorgesehen, um die Geschwindigkeit der pneumatisch geförderten Brennstoffteilchen vor ihrem Eintritt in das Wirbelbett so zu reduzieren, daß ein Durchstoßen dieser Teilchen durch das Wirbelbett vermieden wird. Zur Verhinderung von Anbackungen sind im Bereich der Erweiterung der Brennstoffzufuhrleitung Luftdüsen vorgesehen.

Die DE-A-26 05 886 beinhaltet eine Wirbelbettfeuerungsanlage mit zirkulierender Wirbelschicht. Dabei wird aus dem oberen Bereich der Wirbelschicht ständig Asche abgezogen und über einen außerhalb des Feuerungsraumes angeordneten Ascheumlaufkanal dem unteren Bereich der Wirbelschicht erneut zugeführt. Die Brennstoffzufuhr erfolgt durch eine mechanisch/pneumatische Einspeisung des Brennstoffes in den unteren Bereich des Ascheumlaufkanales. Von dort wird der Brennstoff zusammen mit der Asche oberhalb des Anströmbodens der Wirbelschicht seitlich in den Feuerungsraum eingeführt.

Die DE-A-29 48 482 zeigt ein Wirbelbettverfahren bei dem der Brennstoff von unten über einzelne Verteilerrohre (10) und Düsen (9) in das Wirbelbett eingetragen wird. Eine Brennstoffzuführung über einen vorgeschalteten speziell ausgebildeten Wirbelbettkanal ist dabei nicht vorgesehen.

Die GB-A-2 047 558 zeigt eine Wirbelbettfeuerungsanlage, bei der der Brennstoff über mehrere Kanäle mittels Trägerluft von unten in das Wirbelbett eingetragen wird. Eine kanalartige Ausbildung der Brennstoffzufuhr sowie die Rückführung von gekühlter Asche in den Brennstoffzufuhrkanal ist dabei nicht vorgesehen.

Ein Nachteil der bekannten Wirbelbettfeuerungsanlagen liegt darin, daß es nicht möglich ist, die Brennstoffzufuhr schnell und unproblematisch unterschiedlichen Lastanforderungen anzupassen.

Der Erfindung liegt demnach die Aufgabe zugrunde, eine Wirbelbettfeuerungsanlage der eingangs genannten Art in Richtung eines optimalen Regel- und Dosierverhaltens weiter zu entwickeln.

Diese Aufgabe wird erfindungsgemäß dadurch gelöst, daß die Brennstoffzuführung als ein dem Feuerungsraum vorgeschalteter Wirbelbettkanal mit einem eigenen Düsenboden, welcher eine unabhängig von der Trägerluft des Wirbelbettes einstellbare Luftzufuhr enthält, ausgebildet ist und, daß eine Zufuhrleitung für eine Mischung aus Brennstoff und abgekühltem Wirbelbettmaterial oberhalb des Düsenbodens in den Wirbelbettkanal mündet.

Das vorgeschlagene Gesamtsystem führt zu einer erheblichen Verbesserung des Regel- und Dosierverhaltens einer Wirbelbettfeuerungsanlage.

Dadurch, daß der vorgeschaltete Wirbelbettkanal einen eigenen Düsenboden mit einer unabhängig von der Trägerluft des Wirbelbettes einstellbaren Luftzufuhr enthält, läßt sich die Brennstoffzufuhr in einem breiten Bereich über die Extraktion der vorgeschalteten Wirbelschicht bzw. über die Anströmgeschwindigkeit der Luft des zusätzlichen Düsenbodens regeln. Über die vorgeschaltete Wirbelschicht mit dem eigenen Düsenboden kann daher besonders schnell und unproblematisch die Brennstoffzufuhr unterschiedlichen Lastanforderungen an die Feuerungsanlage angepaßt werden. Das bei Wirbelschichtfeuerungen immer wieder kritisierte ungünstige Regelverhalten bei erforderlich werdenden Laständerungen wird durch das erfindungsgemäß vorgeschlagene Gesamtsystem somit erheblich verbessert.

Gemäß der Erfindung wird der Brennstoff darüber hinaus nicht alleine, sondern in Mischung mit einem Teil aus der Wirbelschicht abzuziehenden Bettasche eingetragen, wobei die innige Durchmischung bereits in der vorgeschalteten Wirbelschicht erfolgt. Auf diese Weise wird verhindert, daß durch eine unerwünschte Brennstoffkonzentration während der Brennstoffzufuhr im Feuerungsraum lokale Temperaturspitzen auftreten, die zu einer Beschädigung der dort üblicherweise angeordneten Wärmeaustauschersysteme führen können. Da im Zuge der innigen Vermischung des Brennstoffes mit der noch heißen Bettasche in der vorgeschalteten Wirbelschicht die Restfeuchte aus dem Brennstoff ausgetrieben wird, kann auch auf die sonst erforderliche Vortrocknung des Brennstoffes verzichtet werden.

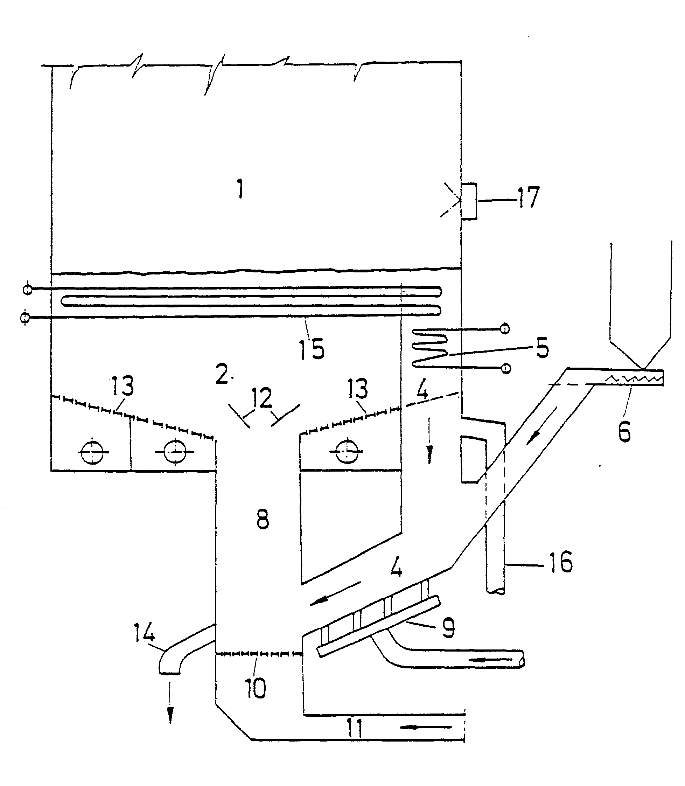

Weitere Erläuterungen zu der Erfindung sind dem in der Figur schematisch dargestellten Ausführungsbeispiel zu entnehmen.

Die Figur zeigt schematisch eine Wirbelschichtfeuerungsanlage 1 mit einem Wirbelbett 2, in dem bei Temperaturen zwischen 800° und 900 °C ein Brennstoff, beispielsweise Ballastkohle, verbrannt wird. Das Wirbelbett 2 enthält eine Mischung aus rd. 99 % Inertmaterial und rd. 1 % Kohlenstoff. Die erzeugte Wärme wird über Tauchheizflächen 15 auf das verdichtete Arbeitsmedium übertragen. Die Rauchgase werden über einen Rauchgasabzugskanal abgezogen, der hier im einzelnen nicht dargestellt ist.

Innerhalb des Wirbelbettes ist ein Ascheabzugskanal 4 angeordnet, dessen oberen Ende als Überlauf ausgebildet ist und bis nahe an die obere Niveaugrenze des Wirbelbettes reicht. Durch diesen Überlauf ist die Betthöhe eindeutig vorgegeben. Änderungen im spezifischen Ge

wicht haben keinen Einfluß auf die Mindestbetthöhe.

Die zunächst noch heiße Asche, die über den Überlauf in den Ascheabzugskanal 4 abfließt, passiert zunächst einen nur schematisch dargestellten Wärmetauscher 5 und wird dabei auf ca. 400° bis 500 °C abgekühlt. Bei diesen Temperaturen kann ein Teil der Bettasche über einen Abzug 16 geregelt ausgeschleust werden. Der Rest wird mit Kohlepartikeln, deren Korngröße bei etwa 10 mm liegt und die über eine mechanische Fördereinrichtung 6, z.B. Redler, Förderschnecke oder Zellenrad, aus einem Vorratsbehälter zugeführt wird, innig vermischt. Falls erforderlich können mit der Kohle auch Absorptionsmittel, z.B. Kalkstein, zur Bindung von Schwefeloxid eingespeist werden.

Im Zuge der Vermischung der Kohle mit der warmen Bettasche wird die Kohle getrocknet und je nach Art der eingesetzten Kohle auch mehr oder weniger vorentgast. Die anfallenden Gase können, soweit sie brennbare Bestandteile enthalten, im Feuerungsraum der Wirbelschichtfeuerungsanlage durch Einsatz von Sekundärluft 17 verbrannt werden.

Die Mischung aus Asche und Kohle durchströmt unter Einwirkung der Schwerkraft die Zufuhrleitung 4, die in einen Wirbelbettkanal 8 mündet. Ggf. kann über entsprechende Düsen 9 Rauchgas zur Auflockerung und Inertisierung der Feststoffströmung in die Zufuhrleitung 4 eingeleitet werden.

Die Feststoffteilchen innerhalb des Wirbelbettkanales 8 werden nunmehr mittels Luft, welche über eine Leitung 11 und den Düsenboden 10 zugeführt wird, in das Wirbelbett transportiert und dort gleichmäßig verteilt. Zusätzliche mechanische Einrichtungen 12 im Einmündungsbereich des Wirbelbettkanales verbessern die gleichmäßige Einspeisung in das Wirbelbett 2.

Zweckmäßigerweise ist der Düsenboden 13 des Wirbelbettes 2 in Richtung der Ausmündung des Wirbelbettkanales 8 geneigt angeordnet. In diesem Falle kann die Entleerung des Wirbelbettes 2 über den Wirbelbettkanal 8 und eine am dortigen Düsenboden vorgesehene Ascheabzugsleitung 14 erfolgen.

Die beschriebene Anordnung ermöglicht ein gutes Regelverhalten der Feuerung. Die Teillastregelung erfolgt zunächst durch Veränderung der Bettemperatur.

Durch Veränderung der durch den Düsenboden 10 strömenden Förderluft läßt sich die Brennstoffzufuhr geregelt durch die mechanische Fördereinrichtung zusätzlich beschleunigen. Bei größeren Laständerungen kann die durch den Düsenboden 13 strömende Verbrennungs- und Trägerluftmenge verändert werden, z.B. durch Zu- oder Abschalten eines Teiles der im Randbereich des Wirbelbettes angeordneten Düsen.

Falls, insbesondere bei größeren Anlagen, mehrere der beschriebenen Anordnungen modulartig zusammengeschaltet sind, können größere Laständerungen auch durch Zu- oder Abschalten einzelner Module bewirkt werden.

Das Anfahren der Anlage erfolgt mit Vorteil über den Wirbelbettkanal 8, indem zunächst in diesem Bereich der Anfahrbrennstoff gezündet wird. Auf diese Weise wird der Bedarf an Hilfsenergie stark reduziert, da diese nur zur Aufheizung des im Vergleich zum eigentlichen Wirbelbett kleinen Wirbelbettkanals erforderlich ist.

## Patentansprüche

1. Wirbelbettfeuerungsanlage mit einem Düsenboden (13) für die Zufuhr von Verbrennungs- und Trägerluft sowie einer von unten in den Feuerungsraum einmündenden Brennstoffzuführung (8), dadurch gekennzeichnet, daß die Brennstoffzuführung (8) als ein dem Feuerungsraum vorgeschalteter Wirbelbettkanal mit einem eigenen Düsenboden (10), welcher unabhängig von der Trägerluft des Wirbelbettes (2) einstellbare Luftzufuhr (11) enthält, ausgebildet ist und daß eine Zufuhrleitung (4) für eine Mischung aus Brennstoff und abgekühltem Wirbelbettmaterial oberhalb des Düsenbodens (10) in den Wirbelbettkanal (8) mündet.

2. Wirbelbettfeuerungsanlage nach Anspruch 1, dadurch gekennzeichnet, daß im Bereich der Einmündung des Wirbelbettkanals (8) in das Wirbelbett (2) mechanische Einrichtungen (12) zur Verteilung der Mischung aus Brennstoff und Bettmaterial im Wirbelbett (2) vorgesehen sind.

## Claims

1. A fluid bed furnace comprising a nozzle base (13) for the supply of combustion air and carrier air and a fuel supply line (8) which enters the furnace chamber from below, characterised in that the fuel supply line (8) is in the form of a fluid bed channel which is arranged in series with the furnace chamber and which has a seperate nozzle base (10) which contains an air supply (11) which is adjustable independently of the carrier air of the fluid bed (2), and that a supply line (4) for a mixture of fuel and cooled fluid bed material enters the fluid bed channel (8) above the nozzle base (10).

2. A fluid bed furnace as claimed in Claim 1, characterised in that in the region of the entrance of the fluid bed channel (8) into the fluid bed (2) mechanical devices (12) are provided which distribute the mixture of fuel and bed material in the fluid bed (2).

## Revendications

1. Installation à foyer à lit fluidisé avec une sole à tuyères (13) pour l'alimentation d'air de combustion et d'air porteur ainsi qu'une alimentation de combustible (8) débouchant par le dessous dans la chambre de combustion, caractérisée en ce que l'alimentation de combustible (8) est réalisée sous forme d'un canal de lit fluidisé placé en aval de la chambre de combustion, avec une sole à tuyères (10) propre qui contient une alimentation d'air (1) indépendante de l'air porteur du lit fluidisé (2), et en ce qu'une conduite d'alimentation (4) pour un mélange de combustible et de matériau refroidi du lit fluidisé débouche au-dessus de la sole à tuyères (10) dans le canal de lit fluidisé (8).

2. Installation à lit fluidisé selon la revendication 1, caractérisée en ce que des dispositifs mécaniques (12) sont prévus dans le lit fluidisé, dans la zone de l'embouchure du canal de lit fluidisé (8), pour répartir le mélange de combustible et du matériau du lit dans le lit fluidisé (2).